# EUROPEAN PATENT APPLICATION

(11) **EP 2 249 229 A1**
(43) Date of publication of application: **10.11.2010**
(21) Application number: 09006077.3
(22) Date of filing: 04.05.2009
(51) Int. Cl.: G06F 3/01

(54) **Non-contact mouse apparatus and method for operating the same**

(71) Applicant: TOPSEED TECHNOLOGY CORP., Chung Ho City, Taipei Hsien, Taiwan 235 (TW)
(72) Inventor: Chen, Shoei-Lai, Chung Ho City, Taipei Hsien, Taiwan 235 (TW); Hsu, Che-Hao, Chung Ho City, Taipei Hsien, Taiwan 235 (TW)
(74) Representative: TER MEER - STEINMEISTER & PARTNER GbR

(57) **Abstract**

A non-contact mouse method uses an image sensor (10) to fetch an original image and adjust the original image to obtain an adjusted image. A motion image is detected in the adjusted image. A mouse block (56) is defmed in the motion image. At least one moving-speed block in the mouse block is defined. A peak position of the motion image is detected. Finally, an operation associated with the moving-speed block pointed by the peak position is executed.

## Description

### BACKGROUND OF THE INVENTION

### Field of the Invention

The present invention relates to a mouse apparatus and method for operating the same, and more particularly to a non-contact mouse apparatus and method for operating the same.

### Description of Prior Art

Computer input devices are used between a man and a computer, for example the keyboards or the computer mice are the most common computer input devices. The user can operate the computer mouse to click buttons, scroll up/down windows, and control a cursor. For the notebook computer, in addition, the touchpad can be taken as the computer mouse.

Electronic data gloves or special devices are applied to imitate keyboards or computer mice in a large-scale interactive or 3D virtual reality. However, the electronic data gloves are expensive and difficult to fit for hands of various sizes. Besides, the electronic data gloves are heavy and impose limitation to operation time and operation action for the operators.

For any kinds of computer mice, moving distance of the cursor is proportional to moving distance of the mouse grasped by user's hand. Hence, it is time-consuming and energy-consuming to control the cursor moving from one end to another end on the computer monitor, and more particularly when extensive back and forth movement is required for the computer mouse.

### SUMMARY OF THE INVENTION

In order to improve the disadvantage mentioned above, the prevent invention provides a method for operating a non-contact mouse.

In order to improve the disadvantage mentioned above, the prevent invention further provides a non-contact mouse apparatus.

In order to achieve the objective mentioned above, the non-contact mouse method uses an image sensor to fetch an original image and adjust the original image to obtain an adjusted image. Afterward, a motion image is detected in the adjusted image, and a mouse block is defined in the motion image. Afterward, at least one moving-speed block in the mouse block is defined, and a peak position of the motion image is detected. Finally, an operation associated with the moving-speed block pointed by the peak position is executed.

In order to achieve the other objective mentioned above, the non-contact mouse apparatus is applied to an image sensor. The non-contact mouse apparatus includes an image sensor driving unit, a motion image recognizing unit, and a mouse driving unit. The image sensor driving unit is electrically connected to the image sensor, the motion image recognizing unit is electrically connected to the image sensor driving unit, and the mouse driving unit is electrically connected to the motion image recognizing unit. Wherein the image sensor fetches an original image and the original image is transmitted to the image sensor driving unit to be transformed into an image electric signal. Afterward, the image electric signal is transmitted to the motion image recognizing unit to be processed as an adjusted image to detect a motion image in the adjusted image. Afterward, a mouse block is defined in the motion image by the motion image recognizing unit. Afterward, at least one moving-speed block in the mouse block is defined. Finally, a peak position of the motion image is detected by the motion image recognizing unit to transmit a simulated mouse signal, which is corresponding to the peak position in the moving-speed block, to the mouse driving unit to control a cursor.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a flowchart of operating a non-contact mouse according to the present invention;
Fig. 2 is a schematic view of using an image difference method;
Fig. 3(a) is a schematic view of a moving-speed block;
Fig. 3(b) is a schematic view of the moving-speed block;
Fig. 4 is a schematic view of a predicted mouse block;
Fig. 5 is a flowchart of executing the moving-speed block;
Fig. 6 is a block diagram of the non-contact mouse apparatus;
Fig. 7 is a schematic view of detecting a peak position; and
Fig. 8 is a schematic view of the moving-speed block.

### DETAILED DESCRIPTION OF THE INVENTION

The non-contact mouse apparatus and method for operating the same can be accomplished by utilizing only a webcam and a personal computer. A hand gesture movement in free space can be used to imitate a computer mouse to control the cursor. The user's skin color, dress and adornment, and complexity of the environmental background are not limited for operating the non-contact mouse apparatus. Also, users can manually operate the non-contact mouse apparatus without holding any objects with special colors or patterns, hand-held lighting device, or wearing any special data gloves. Furthermore, the moving speed of the cursor can be adjusted based on the position of user's gestures to shorten positioning time and increase positioning accuracy.

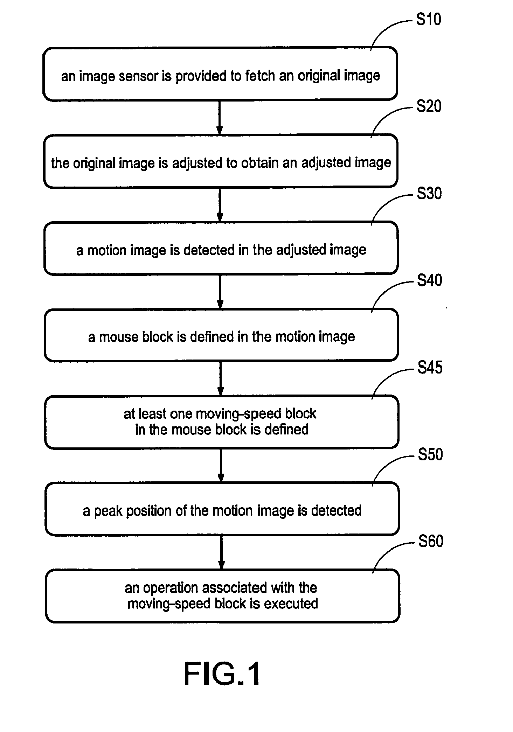

Reference is made to Fig. 1 which is a flowchart of operating a non-contact mouse according to the present invention. First, an image sensor (such as a webcam) is provided to fetch an original image (S10). Afterward, the original image is adjusted to obtain an adjusted image (S20). Afterward, a motion image (such as a gesture image) is detected in the adjusted image (S30). Afterward, a mouse block is defined in the motion image (S40). Afterward, at least one moving-speed block in the mouse block is defined (S45). Afterward, a peak position of the motion image is detected (S50). More particularly, the peak position is a fingertip if the motion image is a gesture image. Finally, an operation associated with the moving-speed block pointed by the peak position is executed (S60).

The above-mentioned step S20 has following sub-steps: (1) to adjust processed size of the original image; (2) to transfer colors of the original image (such as to transfer colors of the original image from 24-bit full-color image to 8-bit gray-level image); and (3) to filter speckle noises of the original image. More particularly, speckle noises of the original image can be filtered by an image low pass filter.

In addition, the moving-speed block includes a start block, a normal-speed motion block, a low-speed motion block, and a high-speed motion block. The size of the mouse block can be set freely by users and the mouse block can be divided into the start block, the normal-speed motion block, the low-speed motion block, and the high-speed motion block therein.

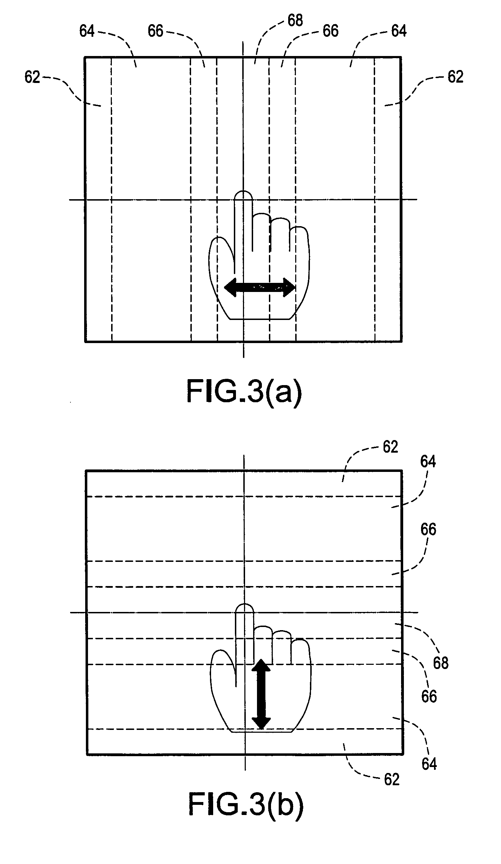

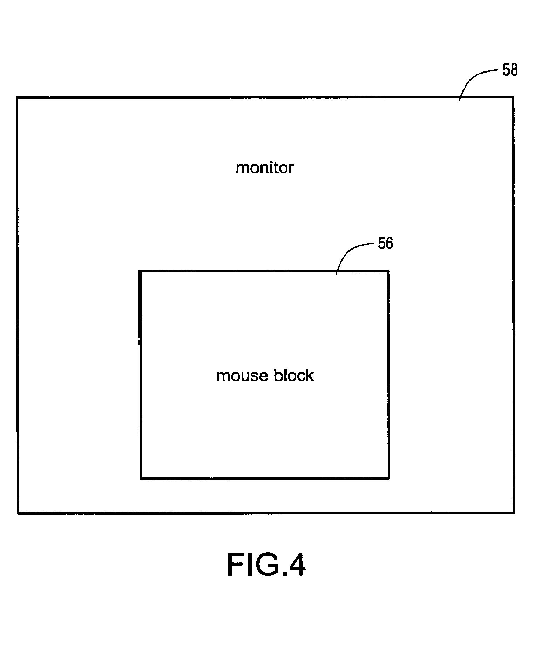

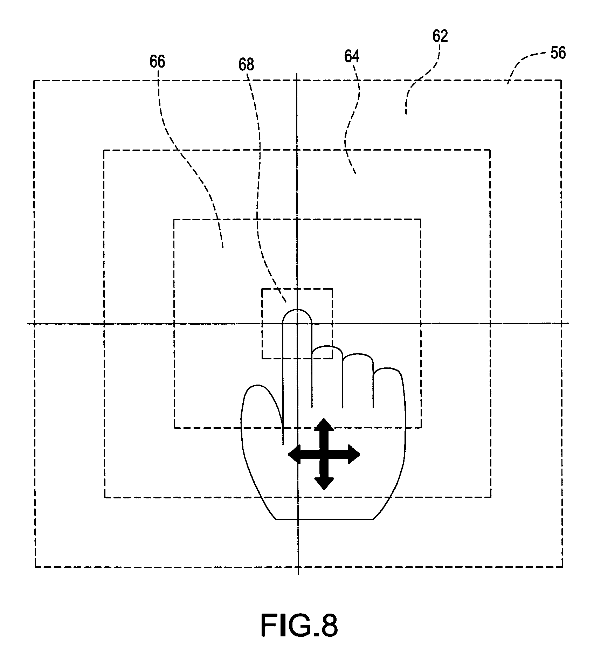

The predicted mouse block 56 is shown in Fig. 4. The start block 68, the normal-speed motion block 64, the low-speed motion block 66, and the high-speed motion block 62 are shown in Fig. 8, Fig. 3(a), and Fig. 3(b). More particularly, the Fig. 3(a) shows a horizontal moving gesture, and the Fig. 3(b) shows a vertical moving gesture. In addition, the motion image in the adjusted image is calculated by using an image difference method.

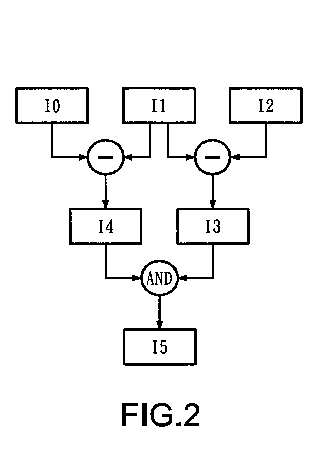

Reference is made to Fig. 2 which is a schematic view of using an image difference method. In order to obtain better performance, three continuous gesture images are provided to calculate the motion image. The three continuous gesture images are a current grey-level image 12, a preceding grey-level image I1 before the current grey-level image I2, and a pre-preceding grey-level image 10 before the preceding grey-level image I1, respectively. A first gray-level threshold value and a second gray-level threshold are set for converting the grey-level image into a binary image. First, the current grey-level image I2 is subtracted by the preceding grey-level image I1 to obtain a first grey-level image (not shown). Afterward, a grey value of each pixel of the first grey-level image is compared to the first gray-level threshold value. A pixel is set as a bright pixel when the grey value of the pixel is greater than or equal to the first gray-level threshold value; on the contrary, a pixel is set as a dark pixel when the grey value of the pixel is less than the first gray-level threshold value. Hence, a first binary image I3 is composed of the bright pixels and the dark pixels. In the same way, the preceding grey-level image I1 is subtracted by the pre-preceding grey-level image 10 to obtain a second grey-level image (not shown). Afterward, a grey value of each pixel of the first grey-level image is compared to the second gray-level threshold value. A pixel is set as a bright pixel when the grey value of the pixel is greater than or equal to the second gray-level threshold value; on the contrary, a pixel is set as a dark pixel when the grey value of the pixel is less than the second gray-level threshold value. Hence, a second binary image I4 is composed of the bright pixels and the dark pixels. Finally, a logic AND operation is performed between the first binary image I3 and the second binary image I4 to produce a third binary image I5, that the third binary image 15 is the motion image to be processed.

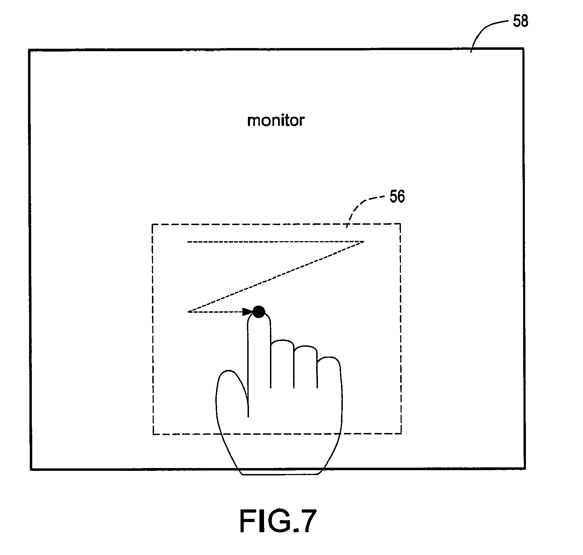

Reference is made to Fig. 7 which is a schematic view of detecting a peak position and the step S50 is expressed as follows: It is assumed that the motion image is a gesture image; hence, the peak position is a fingertip. When motion magnitude of the user's hand is significant (not a careless gross motion or a slight motion), the peak position (fingertip) is tracked from left to right, from top to bottom. If the peak position (fingertip) is not detected or the user's hand is motionless for a period of time, it is to turn a tracking mode to Off and exit.

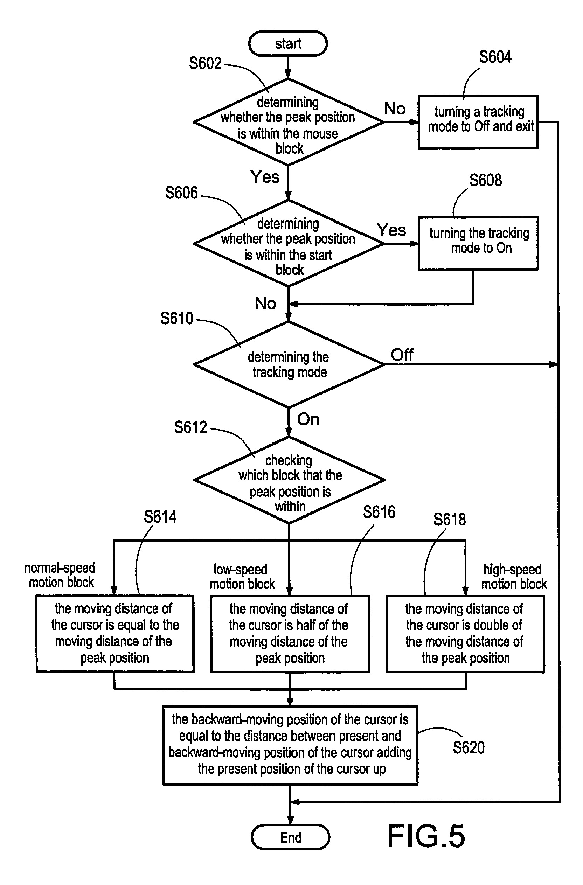

Reference is made to Fig. 5 which is a flowchart of executing the moving-speed block and the step S60 is expressed as follows: It is assumed that the motion image is a gesture image; hence, the peak position is a fingertip. First, it is to determine whether the peak position (fingertip) is within the mouse block (S602). When the peak position (fingertip) is not within the mouse block, Step S604 turns a tracking mode to Off and exit. When the peak position (fingertip) is within the mouse block, Step S606 determines whether the peak position (fingertip) is within the start block (S606). When the peak position (fingertip) is within the start block, step S608 turns the tracking mode to On. Afterward, the step S610 is executed to determine the tracking mode. When the tracking mode is turned to Off, it is to exit; when the tracking mode is turned to On, the step S612 is executed to check which block (the normal-speed motion block, low-speed motion block, or the high-speed motion block) that the peak position (fingertip) is within.

When the peak position (fingertip) is within the normal-speed motion block, the step S614 is executed. The moving distance of the cursor on the monitor 58 is equal to the moving distance of the peak position (fingertip). Also, both the cursor and the peak position (fingertip) move in the same direction. Finally, the step S620 is executed. The backward-moving position of the cursor is equal to the distance between present and backward-moving position of the cursor adding the present position of the cursor up. That is to say, it is similar to use a computer mouse to control the cursor in a normal speed by the user.

When the peak position (fingertip) is within the low-speed motion block, the step S616 is executed. The moving distance of the cursor on the monitor 58 is half of the moving distance of the peak position (fingertip). Also, both the cursor and the peak position (fingertip) move in the same direction. Finally, the step S620 is executed. The backward-moving position of the cursor is equal to the distance between present and backward-moving position of the cursor adding the present position of the cursor up. That is to say, it is similar to use a computer mouse to control the cursor in a lower speed by the user. Hence, it is suitable for use in precise cursor movement.

When the peak position (fingertip) is within the high-speed motion block, the step S618 is executed. The moving distance of the cursor on the monitor 58 is double of the moving distance of the peak position fingertip. Also, both the cursor and the peak position (fingertip) move in the same direction. Finally, the step S620 is executed. The backward-moving position of the cursor is equal to the distance between present and backward-moving position of the cursor adding the present position of the cursor up. That is to say, it is similar to use a computer mouse to control the cursor in a higher speed by the user. Hence, it is suitable for use in fast cursor movement.

For example, when the peak position (fingertip) moves to right side of the low-speed motion block, the cursor slowly moves right. When the peak position (fingertip) moves to left side of the high-speed motion block, the cursor will fast moves left. The tracking mode will be turned to Off when the mouse course moves to an assigned position and the peak position (fingertip) points on the assigned position over a threshold time (in this embodiment, the threshold time is set to one second). The ratio between the moving distance of the cursor and the moving distance of the peak position (fingertip) could be set based on users' demands. In addition, the threshold time is not limited to one second. The moving-speed blocks are not limited to only one normal-speed motion block, one low-speed motion block, and a high-speed motion block, they can be set based on users' demands instead.

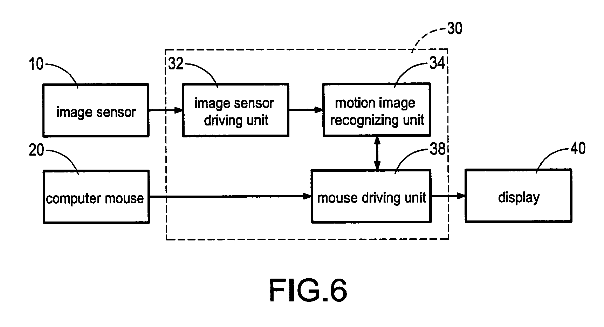

Reference is made to Fig. 6 which is a block diagram of the non-contact mouse apparatus. The non-contact mouse apparatus 30 is applied to an image sensor 10 (such as a webcam). The non-contact mouse apparatus 30 includes an image sensor driving unit 32, a motion image recognizing unit 34, and a mouse driving unit 38. The image sensor 10 is electrically connected to the image sensor driving unit 32. The motion image recognizing unit 34 is electrically connected to the image sensor driving unit 32 and the mouse driving unit 38. The image sensor 10 fetches an original image (not shown) and the original image is transmitted to the image sensor driving unit 32 to be transformed into an image electric signal (not shown). Afterward, the image electric signal is transmitted to the motion image recognizing unit 34 to be processed as an adjusted image (not shown) to detect a motion image (such as a gesture image, not shown) in the adjusted image. Afterward, a mouse block (not shown) is defined in the motion image by the motion image recognizing unit 34. Afterward, at least one moving-speed block (not shown) in the mouse block is defined by the motion image recognizing unit 34. Also, a peak position (not shown) of the motion image is detected by the motion image recognizing unit 34. Finally, an operation associated with the moving-speed block pointed by the peak position is executed. That is to say, the motion image recognizing unit 34 transmits a simulated mouse signal (not shown) to the mouse driving unit 38 to show cursor motion on a display 40 (not shown). Hence, it is similar to use a computer mouse 20 to control the cursor on the display 40 by users.

The step of transmitting the image electric signal to the motion image recognizing unit 34 as follows: (1) to adjust processed size of the original image; (2) to transfer colors of the original image (such as to transfer colors of the original image from 24-bit full-color image to 8-bit gray-level image); and (3) to filter speckle noises of the original image. More particularly, speckle noises of the original image can be filtered by an image low pass filter.

The size of the mouse block of the non-contact mouse apparatus 30 can be set freely by users and the muse block can be divided into the start block, the normal-speed motion block, the low-speed motion block, and the high-speed motion block therein. The predicted mouse block is shown in Fig. 4. The start block 68, the normal-speed motion block 64, the low-speed motion block 66, and the high-speed motion block 62 are shown in Fig. 8, Fig. 3(a), and Fig. 3(b). More particularly, the Fig. 3(a) shows a horizontal moving gesture, and the Fig. 3(b) shows a vertical moving gesture. In addition, the motion image in the adjusted image is calculated by using an image difference method.

The non-contact mouse apparatus and method for operating the same can be accomplished by utilizing only a webcam and a personal computer. A hand gesture moves without foundation to imitate a computer mouse to control the cursor. The user's skin color, dress and adornment, and complexity of the environmental background are not limited for operating the non-contact mouse apparatus. Also, users can manually operate the non-contact mouse apparatus without holding any objects with special colors or patterns, hand-held lighting device, or wearing any special data gloves. Furthermore, the moving speed of the cursor can be adjusted based on the position of user's gestures to shorten positioning time and increase positioning accuracy.

## Claims

1. A method for operating a non-contact mouse, the method comprising the steps of:
(a) fetching an original image by using an image sensor (10);
(b) adjusting the original image to obtain an adjusted image;
(c) detecting a motion image in the adjusted image;
(d) defining a mouse block (56) in the motion image;
(e) defining at least one moving-speed block in the mouse block (56);
(f) detecting a peak position of the motion image; and
(g) executing an operation associated with the moving-speed block pointed by the peak position.

2. The method in claim 1, wherein the step (b) comprising:
(b1) adjusting processed size of the original image;
(b2) transferring colors of the original image; and
(b3) filtering speckle noises of the original image.

3. The method in claim 2, wherein the step (b2) transfers colors of the original image from the 24-bit full-color image to the 8-bit gray-level image.

4. The method in claim 2, wherein the step (b3) filters the speckle noises by an image low pass filter.

5. The method in claim 1, wherein the motion image is a gesture image and the peak position is a fingertip.

6. The method in claim 1, wherein the step (c) calculates the motion image in the adjusted image by using an image difference method.

7. The method in claim 1, wherein the moving-speed block comprises a start block (68), a normal-speed motion block (64), a low-speed motion block (66), or a high-speed motion block (62).

8. The method in claim 1, wherein the image sensor (10) is a webcam.

9. A non-contact mouse apparatus (30) applied to an image sensor (10), comprising:
a image sensor driving unit (32) electrically connected to the image sensor (10);
a motion image recognizing unit (34) electrically connected to the image sensor driving unit (32); and
a mouse driving unit (38) electrically connected to the motion image recognizing unit (34);
wherein the image sensor (10) is configured to fetch an original image, and the image sensor driving unit (32) is configured to transform the original image to an image electric signal, and the motion image recognizing unit (34) is configured to process the image electric signal to an adjusted image and to detect a motion image in the adjusted image;
the motion image recognizing unit (34) is configured to define a mouse block (56) in the motion image;
the motion image recognizing unit (34) is configured to define at least one moving-speed block in the mouse block; and
the motion image recognizing unit (34) is configured to detect a peak position of the motion image to transmit a simulated mouse signal, which is corresponding to the peak position in the moving-speed block, to the mouse driving unit (38) to control a cursor.

10. The non-contact mouse apparatus in claim 9, wherein the motion image is a gesture image and the peak position is a fingertip.

11. The non-contact mouse apparatus in claim 9, wherein the image sensor (10) is a webcam.

12. The non-contact mouse apparatus in claim 9, wherein the moving-speed block comprises a start block (68), a normal-speed motion block (64), a low-speed motion block (66), or a high-speed motion block(62).
